# EUROPÄISCHE PATENTSCHRIFT

(11) **EP 0 350 638 B1**
(45) Veröffentlichungstag und Bekanntmachung des Hinweises auf die Patenterteilung: **15.12.1993**
(21) Anmeldenummer: 89110773.2
(22) Anmeldetag: 14.06.1989
(51) Int. Cl.: G06K 11/06

(54) **Taktiler Sensor**
Tactile sensor
Capteur tactile

(30) Priorität: 14.07.1988 DE 8809052 U; 29.09.1988 DE 3832974; 02.02.1989 DE 3903094
(43) Veröffentlichungstag der Anmeldung: 17.01.1990
(73) Patentinhaber: Blomberg Robotertechnik GmbH, D-59229 Ahlen (DE)
(72) Erfinder: Richter, Hans, D-8900 Augsburg (DE)
(74) Vertreter: Charrier, Rolf, Dipl.-Ing.

(56) Entgegenhaltungen:
- EP-A- 0 288 692
- FR-A- 2 615 941
- US-A- 4 481 815

## Beschreibung

Die Erfindung betrifft einen taktilen Sensor nach dem Oberbegriff des Anspruches 1.

Der taktile Sensor nach der GB-A 21 36 966 weist eine erste Tafel auf, auf der in X-Richtung verlaufende leitende Streifen angeordnet sind, die mit ihrem einem Ende an einen quer dazu verlaufenden Widerstandsstreifen angeschlossen sind. Im Abstand dazu ist eine mittlere Tafel aus leitfähigem Material angeordnet. Im Abstand zu dieser ist eine zweite Tafel vorgesehen, die gleich wie die erste Tafel aufgebaut, jedoch zu dieser um 90° gedreht ist, so daß die leitenden Streifen in Y-Richtung verlaufen. Die mittlere Tafel liegt an einem Bezugspotential, das auch an jeweils einem Ende der beiden Widerstandsstreifen liegt. An den jeweils anderen Enden der Widerstandsstreifen wird das Potential abgegriffen. Wird ein Druck auf den Sensor ausgeübt, der eine Berührung der mittleren Tafel mit den leitenden Streifen der ersten und zweiten Tafel bewirkt, dann kann durch Erfassen der Potentiale an den anderen Enden der Widerstandsstreifen der Ort ermittelt werden, an dem der Druck auf den Sensor wirkt.

Dieser Taktile Sensor weist also eine Vielzahl druckempfindlicher Meßzellen auf, jeweils bestehend aus einer ersten Leiterbahn auf der ersten Tafel, einer zweiten Leiterbahn auf der zweiten Tafel und dem leitfähigen Material der mittleren Tafel.

Bei diesem taktilen Sensor ist es wohl möglich, den Ort zu erfassen, wo der Druck wirkt, es ist jedoch nicht möglich, die Größe des Druckes zu erfassen.

Um die Größe eines Drucks und den Ort des Drucks ermitteln zu können, finden Tafeln aus einem Material Verwendung, dessen elektrischer Widerstand sich mit der Größe des Drucks verändert. Ein solcher taktiler Sensor ist beispielsweise Gegenstand der US-PS 42 08 648. Dieser besteht aus einer ersten Tafel, bei der elektrische Leiter in X-Richtung angeordnet sind, einer mittleren Tafel aus dem vorgenannten Material und einer zweiten Tafel, bei welcher die Leiter in Y-Richtung verlaufen. Dieser taktile Sensor weist den Nachteil auf, daß Ort und Größe des Drucks nur relativ ungenau gemessen werden können. Außerdem hängt das Druck-Widerstandsverhältnis des Materials der mittleren Tafel von vielen Faktoren ab, wie beispielsweise von der Umgebungstemperatur.

Gleiches gilt für den taktilen Sensor nach der US-A 44 81 815, der aus einer Vielzahl von druckempfindlichen Meßzellen besteht, deren Widerstände ein Maß für die Größe des angewandten Drucks darstellt. Jede Meßzelle besteht aus einer Diode in Serie mit einem kohlenstoffdotierten Siliziumkautschukteil.

Es besteht die Aufgabe, den taktilen Sensor der eingangs genannten Art so zu verbessern, daß bei einfachem Aufbau neben dem Ort auch mit hoher Genauigkeit die Größe des Drucks gemessen werden kann.

Gelöst wird diese Aufgabe mit den kennzeichnenden Merkmalen des Anspruches 1. Vorteilhafte Ausgestaltungen sind den Unteransprüchen entnehmbar.

Ausführungsbeispiele werden nachfolgend an Hand der Zeichnungen näher erläutert. Es zeigen:
- Fig. 1:: einen Schnitt auf einen Teil einer ersten Ausführungsform des Sensors längs der Linie A-A in Fig. 2;
- Fig. 2:: einen Schnitt längs der Linie B in Fig. 1;
- Fig. 3:: einen Schnitt längs der Linie C in Fig. 1;
- Fig. 4:: einen der Fig. 2 entsprechenden Schnitt bei Einwirken eines Drucks auf die erste Ausführungsform des Sensors;
- Fig. 5:: einen Schnitt durch eine zweite Ausführungsform des Sensors;
- Fig. 6:: einen Schnitt längs der Linie A-A in Fig.5;
- Fig. 7:: einen Schnitt längs der Linie B-B in Fig.5;
- Fig. 8:: einen Schnitt längs der Linie C-C in Fig.5;
- Fig. 9:: einen Schnitt längs der Linie D-D in Fig.5 bei der zweiten Ausführungsform des Sensors;
- Fig 10:: einen Vertikalschnitt bei einer dritten Ausführungsform des Sensors;
- Fig 11:: einen Schnitt längs der Linie E-E in Fig.10;
- Fig 12:: einen Schnitt längs der Linie F-F in Fig.10;
- Fig 13:: einen Vertikalschnitt durch eine vierte Ausführungsform des Sensors;
- Fig 14:: einen Vertikalschnitt bei einem fünften Ausführungsbeispiel des Sensors;
- Fig 15:: einen Schnitt längs der Linie H-H in Fig.14;
- Fig 16:: einen Schnitt längs der Linie G-G in Fig.14;
- Fig 17:: eine Draufsicht auf die Widerstandsbahnen aufweisende Tafel bei einem sechsten Ausführungsbeispiel;
- Fig 18:: einen Schnitt längs der Linie A-A in Fig.17;
- Fig 19:: eine Draufsicht auf die Leiterbahnen aufweisende Tafel beim sechsten Ausführungsbeispiel;
- Fig 20:: einen Schnitt längs der Linie B-B in Fig. 19 und
- Fig 21:: einen abgewinkelten Vertikalschnitt durch den Sensor nach dem sechsten Ausführungsbeispiel.

Auf einer folienartigen Unterlage 1, welche aus einem elektrisch nicht leitenden Material besteht, sind drei streifenförmige Leiterbahnen 2A, 2B, 2C einer Folie aus Widerstandsmaterial angeordnet. Die Leiterbahnen 2A, 2B, 2C verlaufen im Abstand und parallel zueinander und sind somit voneinander elektrisch isoliert. Die drei Leiterbahnen 2 sind linksseitig jeweils elektrisch zusammengeschaltet, weisen also einen gemeinsamen Anschluß 0 auf. An der rechten Seite ist für jede Leiterbahn ein separater elektrischer Anschluß A1, A2, A3 vorgesehen. Durch Messen des Spannungsabfalls zwischen dem Anschluß 0 einerseits und den Anschlüssen A1, A2, A3 andererseits bzw. durch Messen der über die Anschlüsse A1, A2, A3 fließenden Ströme ist es möglich, den jeweiligen elektrischen Widerstand der Leiterbahnen 2 zu erfassen. Wird der Drucksensor nicht mit Druck beaufschlagt, ist der elektrische Widerstand der Leiterbahnen 2A, 2B und 2C untereinander gleich.

Über den Leiterbahnen 2A, 2B und 2C verlaufen, die Leiterbahnen 2 rechtwinkelig kreuzend, drei elektrische flächige Leiterbahnen 3A, 3B, 3C, die im Abstand zueinander angeordnet und somit elektrisch voneinander isoliert sind. Jede Leiterbahn 3 ist verbunden mit einem Anschluß a, b und c. Diese Leiterbahnen sind angeordnet auf einer flächigen elektrisch nicht leitenden weiteren Folie 4. Die Leiterbahnen 3 besthen aus einem elektrisch gut leitenden Material, das auf die weitere Folie 4 beispielsweise aufgedampft ist.

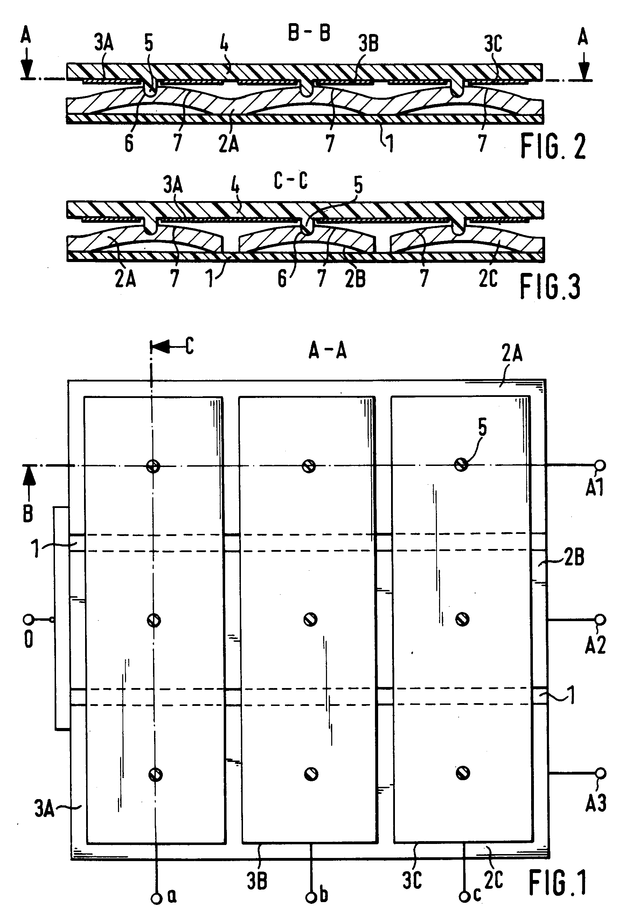

An jeder Kreuzungsstelle zwischen einer Leiterbahn 2A, 2B und 2C mit einer Leiterbahn 3A, 3B und 3C sind die aus einer elastischen Folie bestehenden Leiterbahnen 2A, 2B und 2C in Richtung der jeweiligen Leiterbahn 3A, 3B und 3C konvex gewölbt. Weiterhin weist die weitere Folie 4 an jedem dieser Kreuzungspunkte einen Nippel 5 auf, der in eine entsprechende Vertiefung 6 an jeder konvex gekrümmten Oberfläche 7 eingreift. Im Bereich jedes Nippels weisen die Leiterbahnen 3 Aussparungen auf. Die Nippel 5 halten, wie dies die Fig. 2 und 3 zeigen die Leiterbahnen 3 in geringfügigem Abstand zur Oberfläche der Leiterbahnen 2.

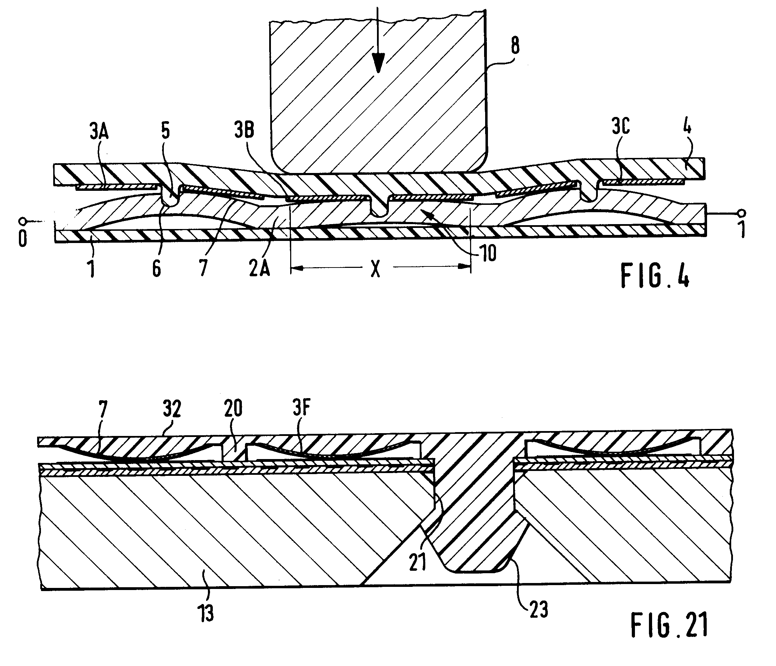

Wird auf den Drucksensor ein Druck beispielsweise mittels eines Stiftes 8 ausgeübt, dann entstehen beispielsweise die Verhältnisse nach Fig. 4. Hierbei kommt die aus Metall bestehende Leiterbahn 3B in flächigen Kontakt mit der aus einem Widerstandsmaterial bestehenden Leiterbahn 2A und überbrückt diese dabei über die Länge X. Der ohmsche Widerstand der Leiterbahn 2A gemessen zwischen den Anschlüssen 0 und A1 wird somit bestimmt durch die Gesamtlänge der Bahn 2A abzüglich der Länge X. Weiterhin nimmt die Leiterbahn 3B ein Potential an, das der halben Potentialdifferenz zwischen den Anschlüssen 0 und A1 entspricht und das am Anschluß b auftritt. Durch das am Anschluß b auftretende Potential und durch den Abfall des Widerstands zwischen den Anschlüssen 0 und A1 bzw. durch das Anwachsen des über den Anschluß A1 fließenden Stroms ist der Ort bestimmbar, an welchem der Stift 8 auf den Sensor einwirkt, nämlich die Zelle 10, wo sich die Leiterbahn 3B und die Leiterbahn 2A kreuzen. Es handelt sich hierbei um die obere mittlere Zelle nach Fig. 1.

Die Größe des vom Stift 8 ausgeübten Drucks bestimmt die Deformation des konvex gewölbten Bereichs der Leiterbahnen 2 jeder Zelle 10. Diese Deformation ist zum Druck etwa proportional und damit etwa proportional des Länge X, über die sich die Leiterbahnen 2 und 3 gegeneinander anschmiegen. Damit bestimmt der durch die Länge X bewirkte Widerstandsabfall bei der Leiterbahn 2 die Größe des ausgeübten Drucks.

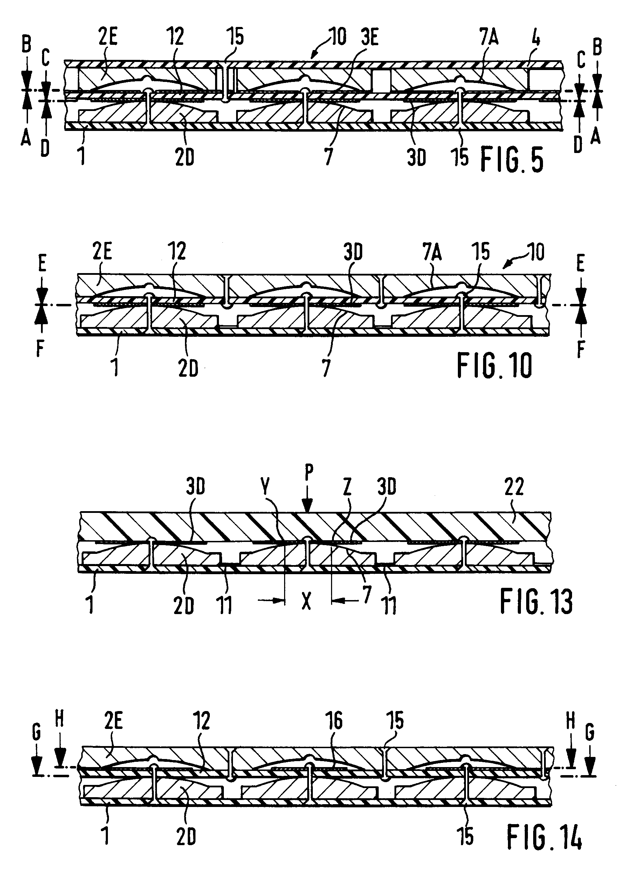

Bei der Ausführungsform nach den Figuren 5 bis 9 sind auf der Unterlage 1 zwei- oder dreiminensional konvex gekrümmte runde Leiter 2D angeordnet (siehe Fig. 8), die aus einem Widerstandsmaterial bestehen und die in vertikaler Richtung durch Leiterstücke 11 aus einem elektrisch gut leitenden Material miteinander verbunden sind. Diese weisen eine konvex gekrümmte Oberfläche 7 auf. Oberhalb dieser starren Leiter 2D ist eine elastische Folie 12 gespannt, die an ihrer Unterseite, den Leitern 2D gegenüberliegend kreisförmige Leiter 3D aus gut leitendem Material trägt (siehe Fig. 9) und die beispielsweise auf die Folie 12 aufgedampft sind.

Auf der Folie 4 sind den Leitern 2D gegenüberliegend stark konvex gekrümmte Leiter 2D angeordnet, die ebenfalls aus einem Widerstandsmaterial bestehen und die in horizontaler Richtung durch Leiterstücke 9 miteinander verbunden sind (siehe Fig. 6). Sie weisen eine konkav gekrümmte Oberfläche 7A auf. Ihnen gegenüberlieged sind auf der Oberseite der Folie 12 jeweils zwei elektrisch voneinander getrennte keilförmige Leiter 3E aus elektrisch gut leitendem Material angeordnet, deren Spitzen horizontal gegeneinander gerichtet sind. Gehalten wird die Folie 12 an den Folien 1 und 4 mittels Nieten 15. Die Leiter 2D mit den Leiterstücken 11 bilden jeweils vertikal verlaufende Leiterbahnen, während die Leiter 2E mit den Leiterstücken 9 horizontal verlaufende Leiterbahnen bilden, die jeweils im wesentlichen aus Widerstandsmaterial bestehen und deren Widerstandswert erfaßt wird.

Wird ein Druck auf die elastische Folie 4 ausgeübt, dann schmiegt sich die elastische Folie 12 druckproportional über die Oberfläche 7 und in die Oberfläche 7A, wobei die Leiterbahnen 3D und 3E eine druckproportionale Überbrückung bei den aus Widerstandsmaterial bestehenden Leitern 2D und 2E bewirkt. Die hierdurch bewirkte Widerstandsänderung ermöglicht eine Druckerfassung nach Ort und Größe.

Bei der Ausführungsform nach den Figuren 5 bis 9 sind die Leiter 2D und 2E, die jeweils in einer Reihe angeordsind, in Serie geschaltet, so daß Ort und Größe der Druckausübung durch Widerstandsmessung der Reihenschaltung in horizontale und vertikale Richtung zu ermitteln sind.

Bei der Ausführungsform nach den Figuren 10 bis 12, die im wesentlichen der Ausführungsform nach den Figuren 5 bis 9 entspricht, sind Anschlüsse für 10 für jeden Leiter 2D vorgesehen, wodurch wohl die Anzahl der Anschlüsse erhöht wird, es jedoch dann möglich ist, die Größe des Drucks bei jeder einzelnen Zelle 10 zu ermitteln. Gemäß Fig. 10 sind in horizontaler Richtung keine einzelnen Leiter 2E vorgesehen sondern diese sind einstückig durchgehend ausgebildet, so daß die Leiterstücke 9 entfallen können.

Bei der Ausführungsform nach Figur 13 sind die aus einem Widerstandsmaterial bestehenden Leiter 2D ebenfalls starr ausgebildet. Die aus einem gut leitenden Material bestehenden Leiter 3D sind auf einer elastischen Folie 22 angeordnet, die sich abhängig vom Druck P vom Punkt Y zum Punkt Z auf der konkaven Oberfläche 7 anschmiegt, wodurch der Leiter 3D beim Leiter 2D die Strecke X elektrisch überbrückt. Ein solcher Sensor ermöglicht die Erfassung des Orts des Drucks und seine Größe in einer Koordinatenrichtung. Für die zweite dazu senkrecht verlaufende Koordinate wird ein zweiter gleich aufgebauter Sensor, jedoch dazu 90° gedreht verwendet. Der in Figur 13 dargestellte Sensor ist auch geeignet als veränderbarer Widerstand, um als Weggeber eingesetzt werden zu können.

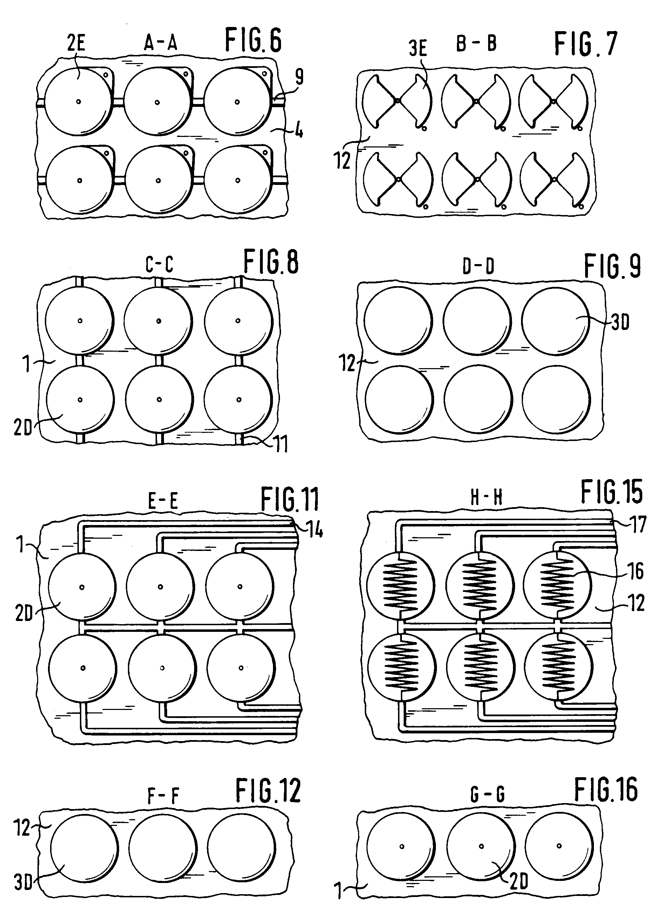

Bei der Ausführungsform nach den Figuren 14 bis 16, die in ihrem Aufbau im wesentlichen derjenigen nach den Figuren 10 bis 12 entspricht, sind in die Folie 12 bei jeder Zelle 10 den Meßstreifen 16 vorgesehen, von denen jeder Anschlüsse 17 aufweist, und es möglich ist, bei jeder Zelle 10 den dort wirkenden Druck zu messen.

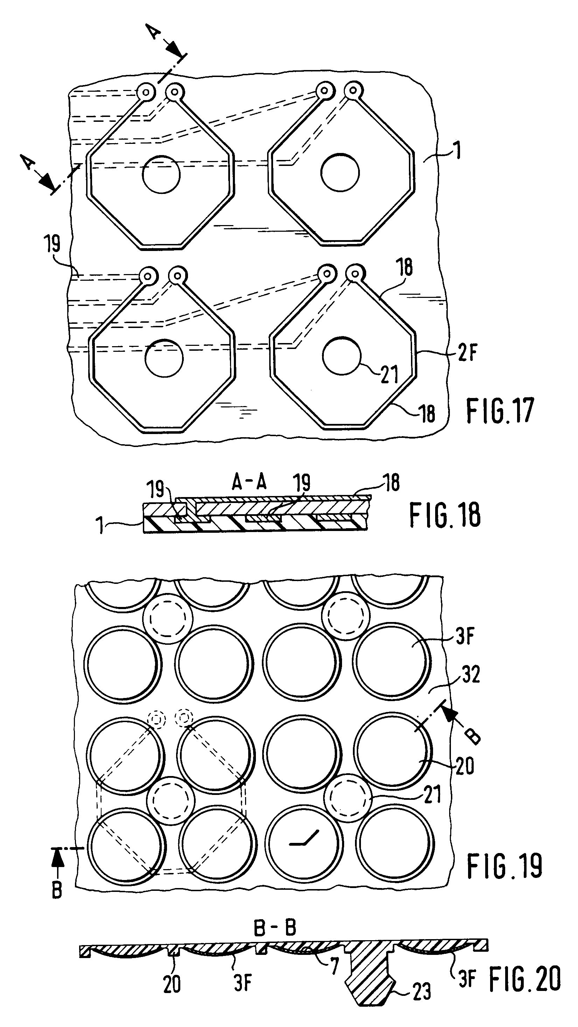

Bei der Ausführungsform nach den Figuren 17 bis 21 ist auf einer Unterlage 13 den aus zwei Schichten bestehende Folie 1 angeordnet, die an ihrer Oberseite Leiterbahnen 2F aus einem Widerstandsmaterial trägt. Jede Leiterbahn 2F ist Teil einer Zelle 10. Jede Leiterbahn 2F weist 4 geradlinige Leiterstücke 18 auf, wobei benachbarte Leiterstücke 18 rechtwinklig zueinander verlaufen. Die beiden Enden jeder Leiterbahn 2F sind elektrisch mit Anschlußleitungen 19 verbunden, die zwischen den beiden Schichten der Folie 1 verlaufen und die aus einem elektrisch gut leitenden Material bestehen.

Auf der Folie 1 ist angeordnet eine elastische Folie 22. Diese elastische Folie 22 weist an dem Bereich der geraden Leiterstücke 18 konvexe Oberflächenbereiche 7 auf, die jeweils mit einer Leiterbahn 3F aus einem gut leitfähigen Material beschichtet sind. Die konvexen Oberflächenbereiche 7 sind kreisförmig ausgebildet. Zwischen den konvexen Oberflächenbereichen 7 sind Distanzstege 20 vorgesehen. Im Zentrum jeder Leiterbahn 2F ist bei der Folie 1 und der Unterlage 13 eine Bohrung 21 angeordnet, in welche ein Nippel 23 der elastischen Folie 22 eingreift, der einen verdickten Kopf aufweist. Auf diese Weise wird die Verbindung zwischen der Folie 22 und der Unterlage 13 hergestellt. Jeweils eine Leiterbahn 2F stellt in Verbindung mit 4 konvexen Oberflächenbereichen 7, die jeweils mit einer Leiterbahn 3F beschichtet sind, eine Zelle 10 dar.

Wird auf die elastische Folie 22 ein Druck ausgeübt, dann schmiegen sich die konvexen Oberflächenbereiche 7 an die Folien 1 an, wobei die Leiterbahnen 3F etwa druckproportional die Leiterstücke 18 der Leiterbahn 2F überbrücken und damit den bei den Anschlüssen 19 gemessenen Widerstand jeder Zelle 10 verändern, d. h. erniedrigen.

## Patentansprüche

1. Taktiler Sensor zur Erfassung der Größe eines ausgeübten Drucks, der aus mindestens zwei parallel zueinander verlaufenden Tafeln besteht, wobei mindestens eine dieser Tafeln elastisch ausgebildet ist, die Tafeln eine Vielzahl von druckempfindlichen Meßzellen (10) aufweisen und jede Zelle (10) eine erste Leiterbahn (2) der einen Tafel und eine zweite Leiterbahn (3) der anderen Tafel aufweist, wobei in allen Zellen die jeweiligen Leiterbahnen (2,3) gleichsinnig verlaufen, die beiden Leiterbahnen (2, 3) streifenförmig ausgebildet sind und die eine der beiden Leiterbahnen (2, 3) aus einem elektrisch gut leitenden Material besteht, **dadurch gekennzeichnet,** daß die andere Leiterbahn (2) aus einem elektrischen Widerstandsmaterial besteht, mindestens eine der Leiterbahnen (2,3) von einer gleichförmig gekrümmten Oberfläche (7) gebildet wird, bei einer Druckausübung durch Deformation des elastischen Materials der elastisch ausgebildeten Tafel (Leiterbahn 2, Folien 12, 22, 32) die beiden Leiterbahnen (2, 3) einer druckbeaufschlagten Zelle (10) sich gegeneinander anschmiegen, hierbei die Länge (X) der Anschmiegung etwa druckproportional erfolgt und zur Bestimmung des Orts und der Größe einer Druckausübung an die anderen Leiterbahnen (2) eine Spannung angelegt wird und die an den einen Leiterbahnen (3) anliegenden Spannungspotentiale sowie die Gesamtlängswiderstände der anderen Leiterbahnen (2) gemessen werden.

2. Taktiler Sensor nach Anspruch 1, dadurch **gekennzeichnet,** daß die gleichmäßig gekrümmte Oberfläche (7) konvex ausgebildet ist.

3. Taktiler Sensor nach Anspruch 1 oder 2, dadurch **gekennzeichnet,** daß jede Zelle (10) gebildet wird aus einer konvex gekrümmten Leiterbahn (2A bis 2D, 3F) und aus einer ebenen Leiterbahn (3A bis 3D, 2F) und mindestens eine der Leiterbahnen (2A bis 2D, 2F, 3A bis 3D, 3F) auf einer elastischen Folie angeordnet ist bzw. aus einer elastischen Folie besteht.

4. Taktiler Sensor nach Anspruch 3, dadurch **gekennzeichnet,** daß die konvex gekrümmte Leiterbahn (2A bis 2C) aus einem elastischen Widerstandsmaterial besteht und die ebene Leiterbahn (3A-3C) auf einer elastischen Folie (4) angeordnet ist.

5. Taktiler Sensor nach Anspruch 3, dadurch **gekennzeichnet,** daß die konvex gekrümmte Leiterbahn (2D) aus einem starren Widerstandsmaterial besteht und die ebene Leiterbahn (3D) auf einer plastischen Folie (12, 22) angeordnet ist.

6. Taktiler Sensor nach Anspruch 3, dadurch **gekennzeichnet,** daß die konvex gekrümmte Leiterbahn (3F) aus einem elastisch gut leitenden Material besteht und auf der konvex gekrümmten Oberfläche (7) einer elastischen Folie (32) angeordnet ist.

7. Taktiler Sensor nach Anspruch 5, dadurch **gekennzeichnet,** daß die elastische Folie (22) aus einem gummieelastischem deformierbaren Material besteht.

8. Taktiler Sensor nach Anspruch 5, dadurch **gekennzeichnet,** daß an der der konvex gekrümmten Leiterbahn (2D) gegenüberliegenden Seite der Folie (12) eine konkav gekrümmte Leiterbahn (2E) angeordnet ist und auf dieser Seite die Folie (12) zwei keilförmige Leiterbahnen (3E) trägt.

9. Taktiler Sensor nach einem der Ansprüche 1 bis 8, dadurch **gekennzeichnet,** daß die aus einem Widerstandsmaterial bestehenden Leiterbahnen einander benachbarter und in einer Reihe angeordneten Zelle (10) elektrisch in Reihe geschaltet sind.

10. Taktiler Sensor nach einem der Ansprüche 1 bis 8, dadurch **gekennzeichnet,** daß die aus einem Widerstandsmaterial bestehende Leiterbahnen der Zellen (10) an voneinander getrennte Anschlüsse (14, 19) angeschlossen sind.

11. Taktiler Sensor nach Anspruch 8, dadurch **gekennzeichnet,** daß zwischen den konkav und konvex gekrümmten Leiterbahnen (2D, 2E) die Folie (12) einen Dehnmeßstreifen (16) trägt.

12. Taktiler Sensor nach Anspruch 4 oder 9, dadurch **gekennzeichnet,** daß mehrere Leiterbahnen (2A, 2B, 2C) aus dem elastischen Widerstandsmaterial in Streifenform nebeneinander angeordnet sind, die bei jeder Zelle (10) konvex gekrümmt sind und die Zellen (10) einander benachbarter Leiterbahnen (2A, 2B, 2C) von streifenförmigen Leiterbahnen (3A, 3B, 3C) aus elektrisch gut leitendem Material überkreuzt werden, die auf der elastischen Folie (4) angeordnet sind.

13. Taktiler Sensor nach Anspruch 5 oder 8, dadurch **gekennzeichnet,** daß die Folie (12) über der konvex gekrümmten Leiterbahn (3D) gespannt gehalten wird.

14. Taktiler Sensor nach einem der Ansprüche 3 bis 6, dadurch **gekennzeichnet,** daß die Leiterbahn (3D, 3E, 3F) aus elektrisch gut leitendem Material voneinander elektrisch getrennt sind.

15. Taktiler Sensor nach Anspruch 6 oder 10, dadurch **gekennzeichnet,** daß die ebene Leiterbahn (2F) aus einem Widerstandsmaterial einer Zelle (10) mehrere geradlinige Leiterstücke (18) aufweist, denen jeweils eine konvex gekrümmte Oberfläche (7) der elastischen Folie (32) zugeordnet ist und auf dieser Oberfläche (7) die Leiterbahn (3F) aus elektrisch gut leitendem Material angeordnet ist.

16. Taktiler Sensor nach Anspruch 15, dadurch **gekennzeichnet,** daß benachbarte Leiterstücke (18) rechtwinklig zueinander verlaufen und die elastische Folie (32) die konvex gekrümmte Oberflächen (7) umgebende Distanzstege (20) aufweist, die gegen die Oberfläche der die ebenen Leiterbahnen (2F) tragende Folie (1) anliegen.

17. Taktiler Sensor nach Anspruch 16, dadurch **gekennzeichnet,** daß zentrisch zu den jeweils vier konvex gekrümmten Oberflächen (7) jeder Zelle (10) ein Nippel (23) an der elastischen Folie (22) angeordnet ist, der in eine Bohrung (21) einer Unterlage (13) eingreift, welche die ebenen Leiterbahnen (2F) trägt.

## Claims

1. A tactile sensor for detecting the magnitude of an applied pressure,
which consists of at least two panels running in parallel with one another, at least one of these panels being made elastic, whilst the panels exhibit a plurality of pressure-sensitive measuring cells (10) and each cell (10) exhibits a first track (2) on the one panel and a second track (3) on the other panel, the respective tracks (2, 3) running in the same sense in all the cells, whilst the two tracks (2, 3) are made in the form of strips and one of the two tracks (2, 3) is made of an electrically highly conductive material,
**characterized in that** the other track (2) consists of an electrically resistant material and at least one of the tracks (2, 3) is formed of a uniformly curved surface (7), and upon the application of pressure, through deformation of the elastic material of the elastically formed panel (track 2, foils 12, 22, 32), the two tracks (2, 3) of a cell (10) which is being acted upon by pressure cling together and the length (X) of the close contact which results in doing so is about proportional to the pressure and for the determination of the place and magnitude of an application of pressure a voltage is applied to the other tracks (2) and the voltage potential applied to the one set of tracks (3) as well as the total longitudinal resistances of the other tracks (2) are measured.

2. A tactile sensor as in Claim 1,
**characterized** in that
the uniformly curved surface (7) is made convex.

3. A tactile sensor as in Claim 1 or 2,
**characterized** in that
each cell (10) is formed of one convexly curved track (2A to 2D, 3F) and one plane track (3A to 3D, 2F) and at least one of the tracks (2A to 2D, 2F, 3A to 3D, 3F) is arranged on or consists of an elastic foil.

4. A tactile sensor as in Claim 3,
**characterized** in that
the convexly curved track (2A to 2C) consists of an elastic resistance material and the plane track (3A - 3C) is arranged on an elastic foil (4).

5. A tactile sensor as in Claim 3,
**characterized** in that
the convexly curved track (2D) consists of a rigid resistance material and the plane track (3D) is arranged on a plastic foil (12, 22).

6. A tactile sensor as in Claim 3,
**characterized** in that
the convexly curved track (3F) consists of an elastically highly conductive material and is arranged on the convexly curved surface (7) of an elastic foil (32).

7. A tactile sensor as in Claim 5,
**characterized** in that
the elastic foil (22) consists of a deformable material having the elasticity of rubber.

8. A tactile sensor as in Claim 5,
**characterized** in that
on the side of the foil (12) opposite the convexly curved track (2D) is arranged a concavely curved track (2E) and on this side the foil (12) carries two wedge-shaped tracks (3E).

9. A tactile sensor as in one of the Claims 1 to 8,
**characterized** in that
the tracks consisting of a resistance material, of cells (10) which are arranged in a row adjacent to one another, are connected electrically in series.

10. A tactile sensor as in one of the Claims 1 to 8,
**characterized** in that
the tracks consisting of a resistance material, of the cells (10), are connected to terminals (14, 19) separated from one another.

11. A tactile sensor as in Claim 8,
**characterized** in that
between the concavely and convexly curved tracks (2D, 2E) the foil (12) carries a wire strain gauge (16).

12. A tactile sensor as in Claim 4 or 9,
**characterized** in that
a number of tracks (2A, 2B, 2C) in the form of strips of the elastic resistance material are arranged side by side and curved convexly at each cell (10) and the cells (10) of tracks (2A, 2B, 2C) adjacent to one another are crossed by tracks (3A, 3B, 3C) in the form of strips of electrically highly conductive material which are arranged on the elastic foil (4).

13. A tactile sensor as in Claim 5 or 8,
**characterized** in that
the foil (12) is kept taut over the convexly curved track (3D).

14. A tactile sensor as in one of the Claims 3 to 6,
**characterized** in that
the tracks (3D, 3E, 3F) of electrically highly conductive material are separated electrically from one another.

15. A tactile sensor as in Claim 6 or 10,
**characterized** in that
the plane track (2F) of a resistance material of one cell (10) exhibits a number of straight pieces of conductor with each of which is associated a convexly curved surface (7) of the elastic foil (32) and on this surface (7) is arranged the track (3F) of electrically highly conductive material.

16. A tactile sensor as in Claim 15,
**characterized** in that
adjacent pieces (18) of conductor run at right angles to one another, and surrounding the convexly curved surfaces (7) the elastic foil (32) exhibits spacer webs (20) which rest against the surface of the foil (1) carrying the plane tracks (2F).

17. A tactile sensor as in Claim 16,
**characterized** in that
in the centre of the four convexly curved surfaces (7) of each cell (10) a nipple (23) is arranged on the elastic foil (22) and engages in a hole (21) drilled in a substrate (13) which carries the plane tracks (2F).

## Revendications

1. Capteur tactile pour déterminer la valeur d'une force d'appui, comprenant au moins deux panneaux parallèles l'un à l'autre, au moins un des panneaux étant élastique, les panneaux présentant un grand nombre de cellules (10) de mesure sensibles à la pression, chacune des cellules (10) présentant une première piste conductive (2) du premier panneau et une deuxième piste conductive (3) de l'autre panneau, lesdites pistes conductives (2, 3) étant orientées, dans toutes les cellules, dans le même sens, l'une des deux pistes conductives (2, 3) ayant la forme d'une bande et étant réalisée en un matériau à bonne conductivité électrique, **caractérisé en ce que** l'autre piste conductive (2) est réalisée en un matériau à résistance électrique, en ce qu'au moins l'une des pistes conductives (2, 3) présente une surface en forme de bossage homogène (7), en ce que les deux pistes conductives (2, 3) d'une cellule (10) soumise à une compression sont pressées l'une contre l'autre par déformation du matériau du panneau élastique (piste conductive 2, films 12, 22, 32), la distance (X) de l'appui mutuel étant approximativement proportionnel à la force d'appui, et en ce que, pour déterminer l'emplacement et la valeur de ladite force d'appui, une tension est appliquée sur les autres pistes conductives (2), les potentiels de tension sont mesurées sur les pistes conductives (3) et les résistances totales dans le sens longitudinal sont mesurées sur les autres pistes conductives (2).

2. Capteur tactile selon la revendication 1, caractérisé en ce que la surface (7) en forme de bossage homogène est une surface convexe.

3. Capteur tactile selon la revendication 1 ou 2, caractérisé en ce que chaque cellule (10) est constituée d'une piste conductive convexe (2A à 2D, 3F) et d'une piste conductive plane (3A à 3D, 2F), et en ce qu'au moins l'une des pistes conductives (2A à 2D, 3F,(3A à 3D, 2F) est disposée sur un film élastique ou réalisé en un film élastique.

4. Capteur tactile selon la revendication 3, caractérisé en ce que la piste convexe (2A à 2C) est réalisée en un matériau élastique à résistance électrique et en ce que la piste plane (3A à 3C) est disposée sur un film élastique (4).

5. Capteur tactile selon la revendication 3, caractérisé en ce que la piste conductive (2D) est réalisée en un matériau rigide à résistance électrique et en ce que la piste plane (3D) est disposée sur un film plastique (12, 22).

6. Capteur tactile selon la revendication 3, caractérisé en ce que la piste conductive (3F) est réalisée en un matériau élastique à bonne conductivité électrique et en ce qu'elle est disposée sur la zone (7) convexe d'un film élastique (32).

7. Capteur tactile selon la revendication 5, caractérisé en ce que le film élastique (22) est réalisé en un matériau déformable en caoutchouc élastique.

8. Capteur tactile selon la revendication 5, caractérisé en ce qu'une piste conductive (2E) concave est disposée sur la face du film (12) située en face de la piste conductive (2D) convexe et en ce que le film (12) présente deux pistes conductives angulaires (3E) sur ladite face.

9. Capteur tactile selon l'une quelconque des revendications 1 à 8, caractérisé en ce que les pistes conductives réalisées en un matériau à résistance électrique des cellules (10) adjacentes et disposées en rangées sont montées en série.

10. Capteur tactile selon l'une quelconque des revendications 1 à 8, caractérisé en ce que les pistes conductives des cellules (10), réalisées en un matériau à résistance électrique, sont reliées à des connexions (14, 19) séparées l'une de l'autre.

11. Capteur tactile selon la revendication 8, caractérisé en ce que le film (12) comprend une bande de mesure (16) située entre les pistes conductives convexes et concaves (2D, 2E).

12. Capteur tactile selon la revendication 4 ou 9, caractérisé en ce que plusieurs pistes conductives (2A, 2B, 2C) réalisées en un matériau à résistance électrique sont disposées, sous forme de bandes, les unes à côté des autres et présentent un bossage convexe au niveau de chacune des cellules (10) et en ce que les cellules (10) des pistes conductives adjacentes (2A, 2B, 2C) se croisent avec des pistes conductives sous forme de bandes (3A, 3B, 3C) à bonne conductivité électrique et disposées sur le film élastique (4).

13. Capteur tactile selon la revendication 5 ou 8, caractérisé en ce que le film (12) est tendu au-dessus de la piste conductive (3D) convexe.

14. Capteur tactile selon l'une quelconque des revendications 3 à 6, caractérisé en ce que les pistes conductives (3D, 3E, 3F) réalisées en un matériau à bonne conductivité électrique sont isolées entre elles.

15. Capteur tactile selon la revendication 6 ou 10, caractérisé en ce que les pistes conductives planes (2F) d'une cellule (10), réalisées en un matériau à résistance électrique présentent plusieurs éléments conducteurs (18) rectilignes auxquels est attribuée une surface convexe (7) du film élastique (32) et en ce que la piste conductive (3F) réalisée en un matériau à bonne conductivité électrique est disposée sur cette surface (7).

16. Capteur tactile selon la revendication 15, caractérisé en ce que le film (32) élastique présente des entretoises (20) entourant les surfaces convexes (7), ces entretoises s'appuyant contre la surface du film (1) portant les pistes conductives planes (2F).

17. Capteur tactile selon la revendication 16, caractérisé en ce qu'un tourillon (23) est disposé sur le film (22) élastique au niveau du centre de chaque groupe de 4 surfaces convexes (7) de chaque cellule (10), ce tourillon étant introduit dans un trou (21) pratiqué dans le support (13) des pistes conductives planes (2F).
